# FASCICULE DE BREVET EUROPEEN

(11) **EP 3 749 714 B1**
(45) Date de publication et mention de la délivrance du brevet: **21.10.2026**
(21) Numéro de dépôt: 19710450.8
(22) Date de dépôt: 05.02.2019
(51) Int. Cl.: C08L 71/00

(54) **MÉLANGES DE POLYARYLETHERCETONES PRESENTANT UNE RESISTANCE AU CHOC, UN ALLONGEMENT A LA RUPTURE ET UNE SOUPLESSE AMELIORES**
MISCHUNGEN AUS POLYARYLETHERKETONEN MIT VERBESSERTER SCHLAGZÄHIGKEIT, BRUCHDEHNUNG UND FLEXIBILITÄT
BLENDS OF POLYARYLETHERKETONES HAVING IMPROVED IMPACT-RESISTANCE, ELONGATION AT BREAK AND FLEXIBILITY

(30) Priorité: 05.02.2018 FR 1850951
(43) Date de publication de la demande: 16.12.2020
(73) Titulaire: ARKEMA FRANCE, 92800 Puteaux (FR)
(72) Inventeur: PAUL, Clément, 27470 SERQUIGNY (FR); BUSSI, Philippe, 92705 COLOMBES CEDEX (FR); BRULE, Benoit, 27470 SERQUIGNY (FR)
(74) Mandataire: Arkema Patent
(86) Numéro de dépôt international: PCT/FR2019/050257
(87) Numéro de publication internationale: WO 2019/150060

(56) Documents cités:
- US-A1- 2005 004 326
- US-A1- 2010 147 548
- US-A1- 2017 242 372

## Description

### [Domaine technique]

La présente demande de brevet concerne des mélanges de polymères à base de poly(aryléthercétones) présentant une résistance au choc, un allongement à la rupture et une souplesse améliorés. Elle concerne également un procédé de fabrication de tels mélanges, ainsi que leur utilisation pour la fabrication de pièces, notamment dans le domaine du pétrole, la câblerie, l'aéronautique, l'automobile, l'électronique, l'électrotechnique, les composites, la fabrication additive et des dispositifs médicaux.

### [Technique antérieure]

Les poly(aryléthercétones) (PAEK) sont des polymères thermoplastiques hautes performances adaptés à une utilisation dans des environnements extrêmes en raison de leur haut point de fusion associé à d'excellentes propriétés mécaniques et une résistance au feu et aux produits chimiques exceptionnelle. Les PAEK peuvent ainsi concurrencer les métaux avec l'avantage d'être plus légers et de pouvoir être transformés avec les techniques conventionnelles de mise en œuvre des matériaux thermoplastiques.

Nonobstant ces propriétés avantageuses, il est parfois nécessaire de formuler les poly(aryléthercétones) afin de répondre à des cahiers des charges spécifiques. Ainsi, on peut rechercher une résistance au choc plus élevée afin de fabriquer des pièces résistant notamment mieux à la propagation de fissures. Par ailleurs, une plus grande souplesse permet d'accommoder de nouveaux modes d'utilisation et mises en place des pièces, avec une possibilité de flexion plus importante, permettant par exemple un montage plus aisé dans un espace restreint tel qu'un moteur ou un enroulement sur un mandrin de plus faible rayon.

On sait, par exemple de US 2009/0292073 A1, que l'ajout de polyoléfines telles que le polyocténylène permet d'améliorer la résistance au choc du poly(aryléthercétone).

La demande de brevet US 2005/0004326 A1 propose par ailleurs d'améliorer la résistance au choc et l'allongement à la rupture de poly(éthercétones) en les formulant avec un polysiloxane. Afin d'améliorer la compatibilité du polysiloxane, celui-ci présente de préférence un poids moléculaire très élevé. Néanmoins, la dispersion du polysiloxane dans ces mélanges n'est pas toujours satisfaisante.

Aussi, ces mélanges peuvent présenter des difficultés de fabrication, dès la phase de compoundage mais aussi lors de la mise en forme.

Par ailleurs, le brevet US 8,013,251 B2 enseigne que l'ajout d'un copolymère à blocs polyimide et polysiloxane permet d'augmenter la ductilité de poly(aryléthercétones). Néanmoins, les exemples mettent en évidence que seuls certains copolymères permettent le compoundage, et qu'il faut une quantité d'au moins 50% en poids pour améliorer la ductilité. Or la présence de telle quantité de copolymère affecte les propriétés de la matrice poly(aryléthercétone), notamment sa tenue en température et sa stabilité dimensionnelle.

La demande de brevet US 2017/0242372 A1 décrit une bande transporteuse fabriquée en un mélange comprenant un poly(étherimide) modifié par un polysiloxane, un polyétherimide, un poly(étheréthercétone) et un matériau conducteur.

L'ensemble des mélanges proposés ne permet toutefois toujours pas de répondre au cahier de charges de certaines applications exigeantes.

### [Résumé de l'invention]

L'invention a donc pour but de proposer des mélanges à base poly(aryléthercétones) présentant une résistance au choc, un allongement à la rupture et une souplesse améliorée par rapport aux mélanges de l'état de la technique.

En effet, la présente invention repose sur la constatation qu'un mélange à base de poly(aryléthercétone) ternaire, comprenant un polysiloxane et un copolymère séquencé à blocs polysiloxane, présente d'excellentes propriétés de résistance au choc et une souplesse améliorée par rapport à des mélanges comparables comportant seulement deux parmi ces composantes.

Au vu des résultats actuels, il est supposé que les propriétés mécaniques avantageuses sont liées notamment à la présence du copolymère séquencé à bloc polysiloxane, lequel assure une meilleure dispersion du polysiloxane. En effet, l'étude de la microstructure a révélé que les mélanges selon l'invention présentent une dispersion plus fine comparée à des mélanges de poly(aryléthercétone) contenant seulement le polysiloxane. Il est supposé que le copolymère séquencé à blocs polysiloxane facilite la dispersion de polysiloxane dans la matrice de poly(aryléthercétone) en agissant comme un agent tensioactif.

Sur cette base, il a pu être validé que les mélanges ternaires de poly(aryléthercétone) selon l'invention présentent une résistance au choc, un allongement à la rupture et une souplesse améliorés. De tels mélanges peuvent dès lors satisfaire un cahier des charges exigeant, accommoder de nouveaux modes d'utilisation et mises en place des pièces et réduire la contrainte requise pour une déformation donnée et ainsi la fatigue pour prolonger la durée de vie des pièces.

Aussi, selon un premier aspect, l'invention a pour objet un mélange de polymères, comprenant :
(i) un poly(aryléthercétone) ;
(ii) un polysiloxane ; et
(iii) un copolymère séquencé à blocs polysiloxane,
et optionnellement des polymères additionnels, différents desdits poly(aryléthercétone), polysiloxane, et copolymère séquencé à blocs polysiloxane, la teneur en polymères additionnels étant inférieure à 20% en poids.

Selon un mode de réalisation préféré, le mélange dans lequel le poly(aryléthercétone) présente une viscosité, telle que mesurée à 380°C et 1 Hz, supérieure à 100 Pa·s, de préférence supérieure à 200 Pa·s et tout particulièrement supérieure à 300 Pa·s.

De préférence, le poly(aryléthercétone) est choisi parmi le groupe constitué de poly-éther-cétone (PEK), polyéther-éther-cétone (PEEK), poly-éther-éther-cétone-cétone (PEEKK), poly-éther-éther-cétone-cétone (PEKK), poly-éther-cétone-éther-cétone-cétone (PEKEKK), poly-éther-éther-cétone-éther-cétone (PEEKEK), poly-éther-éther-éther-cétone (PEEEK), et poly-éther-diphényle-éther-cétone (PEDEK), leurs mélanges et leurs copolymères entre eux ou avec d'autres membres de la famille des poly(aryléthercétone).

Avantageusement, le mélange de polymères selon l'invention comprend 50 à 98, de préférence 60 à 96, encore préféré 70 à 95% en poids de poly(aryléthercétone).

De préférence, le poly(aryléthercétone) est un poly(éthercétonecétone) (PEKK), un poly(étheréthercétone) (PEEK) ou un de ses mélanges.

Le PEKK peut présenter en particulier un pourcentage massique en motifs téréphtaliques par rapport à la somme des motifs téréphtaliques et isophtaliques compris entre 50 et 90%.

Le polysiloxane peut présenter une viscosité, telle que mesurée à 380°C et 1 Hz, supérieure à 100 Pa·s, de préférence supérieure à 200 Pa·s et tout particulièrement supérieure à 300 Pa·s.

De préférence, le mélange de polymères selon l'invention comprend 1 à 49, de préférence 2 à 40, encore préféré 2.5 à 25 % en poids de polysiloxane.

De préférence, le copolymère séquencé à blocs polysiloxane présente une viscosité, telle que mesurée à 380°C et 1 Hz, supérieure à 100 Pa·s, de préférence supérieure à 200 Pa·s et tout particulièrement supérieure à 300 Pa·s.

Avantageusement, le mélange de polymères selon l'invention comprend 1 à 49, de préférence 2 à 40, encore préféré 2,5 à 30% en poids de copolymère séquencé à blocs polysiloxane.

De préférence, le copolymère séquencé à blocs polysiloxane comporte en outre des blocs choisis parmi les poly(étherimide), les poly(aryléthercétone), les poly(aryléthersulfone), les poly(sulfure de phénylène), les poly(arylamideimide), les poly(phénylène), les poly(benzimidazole), ou polycarbonate.

Selon un deuxième aspect, l'invention vise un procédé de préparation d'un mélange de polymères selon l'invention, comprenant les étapes de :
(a) mettre en contact un poly(aryléthercétone), un polysiloxane et un copolymère séquencé à blocs polysiloxane dans des conditions où le poly(aryléthercétone) entre en fusion ; et
(b) laisser le dit mélange refroidir pour obtenir le mélange.

De préférence, l'étape (a) est réalisée dans une extrudeuse bi-vis ou un comalaxeur.

Selon un troisième aspect, l'invention vise l'utilisation d'un mélange de polymères selon l'invention pour la fabrication de pièces, notamment par moulage, notamment par moulage par injection ou par moulage par compression, par fabrication additive par fusion de filament (FFF), extrusion de films ou de feuilles, extrusion calandrage, extrusion de tubes ou tuyaux, extrusion gainage, filage, rotomoulage, thermoformage, enduction, fabrication additive par frittage laser, revêtement à partir de poudre ou pour la réalisation de composites.

Selon un quatrième aspect enfin, l'invention vise une pièce, fabriquée au moins partiellement à partir du mélange de polymères selon l'invention.

### [Brève description des figures]

L'invention sera mieux comprise au regard de la description qui suit et des figures, lesquelles montrent :
- Fig. 1: le mélange de l'exemple 3 observée en microscopie électronique à balayage (MEB) sous grossissement X400 ;
- Fig. 2: le mélange de l'exemple 4 observée en microscopie électronique à balayage (MEB) sous grossissement X400 ; et
- Fig. 3: le mélange de l'exemple Comp 2 observée en microscopie électronique à balayage (MEB) sous grossissement X400.

### [Description des modes de réalisation]

### Définition des termes

On entend par le terme « **mélange de polymère** » désigner une composition de polymères homogène macroscopiquement. Le terme englobe également de telles compositions composées de phases non miscibles entre elles et dispersées à échelle micrométrique.

On entend par le terme « **copolymère** » désigner un polymère issu de la copolymérisation d'au moins deux types de monomère chimiquement différents, appelés comonomères. Un copolymère est donc formé d'au moins deux motifs de répétition. Il peut également être formé de trois ou plus motifs de répétition.

Plus spécifiquement, on entend par le terme « **copolymère séquencé** à blocs polysiloxane» désigner des copolymères au sens précité, dans lesquels au moins deux blocs d'homopolymère distincts sont liés par liaison covalente et l'un des blocs est composé de motifs de répétition siloxane. La longueur des blocs peut être variable. De préférence, les blocs sont composés de 1 à 1000, de préférence 1 à 100, et en particulier 1 à 50 unités de répétition, respectivement. Le lien entre les deux blocs d'homopolymère peut parfois exiger un motif non répétitif intermédiaire appelée bloc de jonction.

On entend par le terme de « **dispersion** » désigner une composition hétérogène, notamment comportant plusieurs phases. Dans le mélange selon l'invention, le poly(aryléthercétone) forme généralement la phase continue et les autres composantes une ou plusieurs phases dispersées.

On entend par le terme « **viscosité** » désigner la viscosité telle que mesurée à 380°C et à 1 Hz sous atmosphère inerte (N₂), au moyen d'un rhéomètre oscillatoire « Anton Paar, MCR 302 », en géométrie plan/plan.

On entend par le terme « **taux de cristallinité** » désigner le taux de cristallinité tel que calculé à partir de mesures de diffusion des rayons X aux grands angles (WAXS), sur un appareil de type Nano-inXider^{®} avec les conditions suivantes :
- Longueur d'onde : raie principale Kα1 du cuivre (1,54 Angström).
- Puissance du générateur : 50 kV - 0.6 mA.
- Mode d'observation : transmission
- Temps de comptage : 10 minutes

On obtient ainsi un spectre de l'intensité diffusée en fonction de l'angle de diffraction. Ce spectre permet d'identifier la présence de cristaux, lorsque des pics sont visibles sur le spectre en plus du halo amorphe. Dans le spectre, on peut mesurer l'aire des pics cristallins (notée A) et l'aire du halo amorphe (notée AH). La proportion (massique) de PAEK cristallin dans le PAEK est estimée par le rapport (A)/(A+AH).

On entend par le terme « **température de fusion** » désigner la température à laquelle un polymère au moins partiellement cristallin passe à l'état liquide visqueux, telle que mesurée par analyse calorimétrique différentielle (DSC) selon la norme NF EN ISO 11 357-3 en utilisant une vitesse de chauffe de 20°C/min.

On entend par le terme « **température de transition vitreuse** » désigner la température à laquelle un polymère au moins partiellement amorphe passe d'un état caoutchoutique vers un état vitreux, ou vice versa, telle que mesurée par analyse calorimétrique différentielle (DSC) selon la norme NF EN ISO 11 357-2 en utilisant une vitesse de chauffe de 20°C/min.

### Poly(aryléthercétone)

Selon l'invention, le mélange comprend au moins un poly(aryléthercétone) (PAEK).

Les poly(aryléthercétones) (PAEK) comportent les motifs de formules suivantes:

(- Ar - X -) et (- Ar₁ - Y - )

dans lesquelles :
- Ar et Ar₁ désignent chacun un radical aromatique divalent;
- Ar et Ar₁ peuvent être choisis, de préférence, parmi le 1,3-phénylène, 1,4-phénylène, le 4,4'-biphénylène, le 1,4- naphthylène, le 1,5-naphthylène et le 2,6-naphthylène, éventuellement substitués;
- X désigne un groupe électroattracteur ; il peut être choisi, de préférence, parmi le groupe carbonyle et le groupe sulfonyle,
- Y désigne un groupe choisi parmi un atome d'oxygène, un atome de soufre, un groupe alkylène, tel que -CH₂- et l'isopropylidène.

Dans ces motifs X et Y, au moins 50%, de préférence au moins 70% et plus particulièrement, au moins 80% des groupes X sont un groupe carbonyle, et au moins 50%, de préférence au moins 70% et plus particulièrement au moins 80% des groupes Y représentent un atome d'oxygène. Selon un mode de réalisation préféré, 100% des groupes X désignent un groupe carbonyle et 100% des groupes Y représentent un atome d'oxygène.

Plus préférentiellement, le poly(aryléthercétone) (PAEK) peut être choisi parmi :
- un poly-éther-cétone-cétone, également nommé PEKK, comprenant des motifs de formule I A, de formule I B et leur mélange : 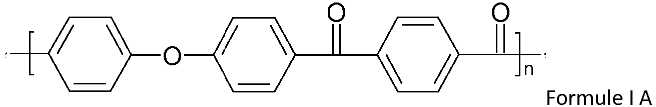 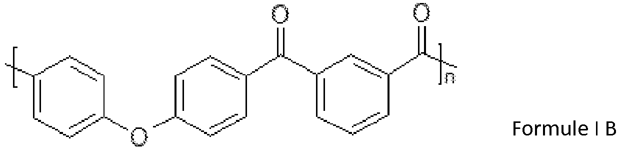
- un poly-éther-éther-cétone, également nommé PEEK, comprenant des motifs de formule II:

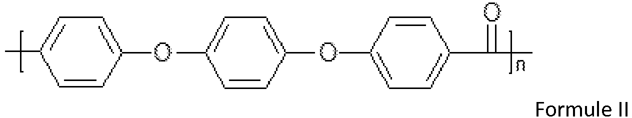

Les enchainements peuvent être totalement para (Formule II). De la même façon on peut introduire, partiellement ou totalement, des enchaînements méta dans ces structures au niveau des éthers et des cétones selon les deux exemples des formules III et IV ci-dessous :

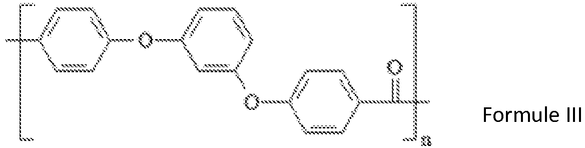

Ou encore :

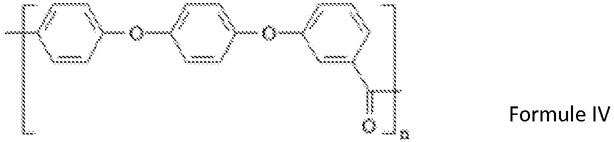

Ou des enchainements en ortho selon la formule V : 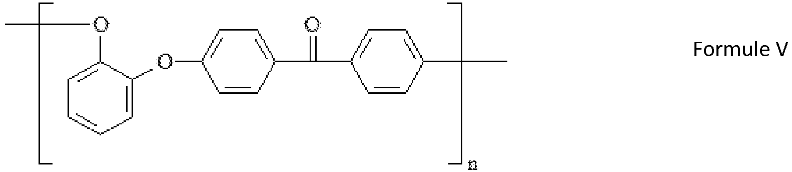
- un poly-éther-cétone, également nommé PEK, comprenant des motifs de formule VI :

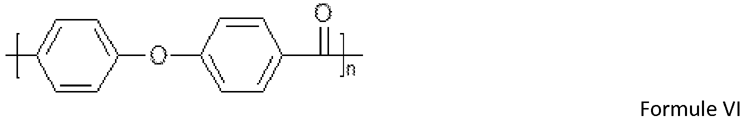

De la même façon, l'enchainement peut être totalement para mais on peut introduire aussi des enchaînements méta partiellement ou totalement (formules VII et VIII): 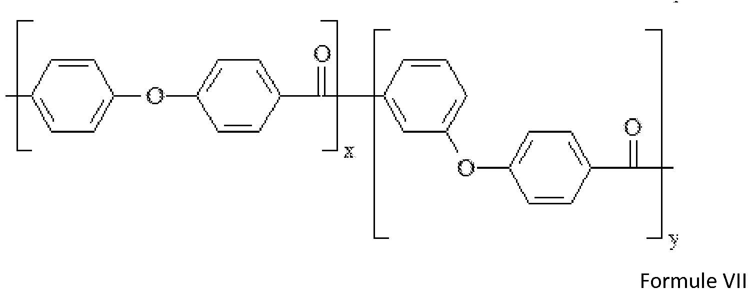 ou 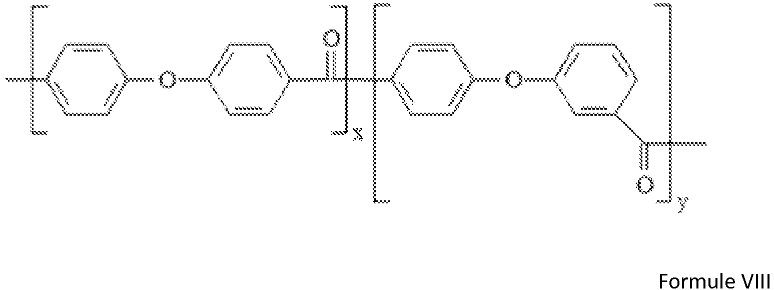
- un poly-éther-éther-cétone-cétone, également nommé PEEKK, comprenant des motifs de formules IX :

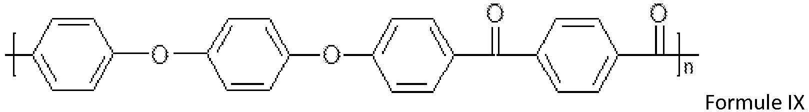

De la même façon on peut introduire des enchaînements méta dans ces structures au niveau des éthers et des cétones.
- un poly-éther-éther-éther-cétone, également nommé PEEEK, comprenant des motifs de formules X :

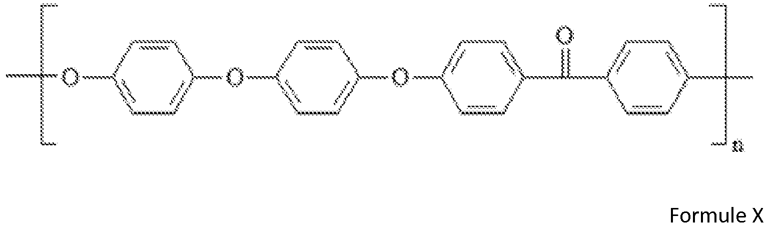

De la même façon on peut introduire des enchaînements méta dans ces structures au niveau des éthers et des cétones mais aussi des enchaînements biphénols ou diphényls selon la formule XI (motifs de type D dans les prochaines appellations, la formule XI correspond ainsi à l'appellation PEDEK) :

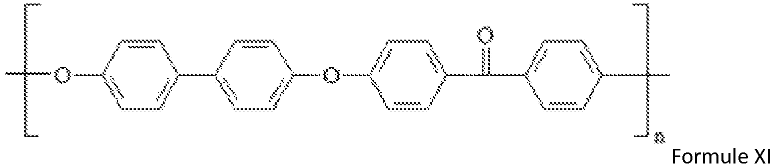

D'autres arrangements du groupe carbonyle et de l'atome d'oxygène sont également possibles.

Dans l'ensemble des formules précédentes, l'indice n, lorsque présent, peut prendre des valeurs quelconques, notamment 1 à 100, de préférence 1 à 50 et tout particulièrement 1 à 10. De préférence, l'indice n vaut 1. Dans l'ensemble des formules précédentes, les indices x et y, lorsque présents, peuvent indépendamment l'un de l'autre prendre des valeurs quelconques, notamment 1 à 100, de préférence 1 à 50 et tout particulièrement 1 à 10. De préférence, l'indice x et y valent 1.

De préférence, les PAEK utilisés dans l'invention sont choisis parmi le groupe constitué de poly-éther-cétone (PEK), polyéther-éther-cétone (PEEK), poly-éther-éther-cétone-cétone (PEEKK), poly-éther-éther-cétone-cétone (PEKK), poly-éther-cétone-éther-cétone-cétone (PEKEKK), poly-éther-éther-cétone-éther-cétone (PEEKEK), poly-éther-éther-éther-cétone (PEEEK), et poly-éther-diphényle-éther-cétone (PEDEK), leurs mélanges et leurs copolymères entre eux ou avec d'autres membres de la famille des PAEK. Le PEEK et le PEKK ainsi que leurs mélanges sont particulièrement préférés.

Avantageusement, l'évolution de la masse moléculaire du PAEK à l'état fondu peut être limitée par l'ajout d'un ou plusieurs additifs, par exemple des phosphates.

De préférence, le poly(aryléthercétone) (PAEK) dans le mélange selon l'invention comprend au moins un polyéther-cétone-cétone (PEKK) qui représente plus de 50%, de préférence plus de 60%, notamment plus de 70%, encore préféré plus de 80% et en particulier plus de 90% massique de cette composante, borne comprise. Les 10 à 50% massiques restants peuvent être constitués par d'autres polymères appartenant à la famille des PAEK.

Avantageusement, le PEKK présente un pourcentage massique en motifs téréphtaliques par rapport à la somme des motifs téréphtaliques et isophtaliques compris entre 40 et 100% et de préférence entre 50 et 90%, et tout particulièrement entre 60 et 80%, bornes incluses.

De manière davantage préférée, le poly(aryléthercétone) est essentiellement constitué de PEKK ou de PEEK.

Le poly(aryléthercétone) dans le mélange selon l'invention peut être amorphe ou semi-cristallin. La cristallinité du poly(aryléthercétone) dépend notamment de la structure du polymère mais peut aussi être fonction de son histoire thermique.

Selon un mode de réalisation préféré de l'invention, le poly(aryléthercétone) dans le mélange selon l'invention est amorphe. Selon un autre mode de réalisation préféré, celui-ci est semi-cristallin. Dans ce dernier cas, le poly(aryléthercétone) dans le mélange selon l'invention présente avantageusement une cristallinité jusqu'à 60%, de préférence de 10 à 50%, encore plus préférée de 15 à 40% et particulièrement préférée de 20 à 30%.

Le mélange selon l'invention contient de préférence un poly(aryléthercétone) présentant une viscosité, mesurée à 380°C et 1 Hz, supérieure à 100 Pa·s, de préférence supérieure à 200 Pa·s et tout particulièrement supérieure à 300 Pa·s.

La température de fusion du poly(aryléthercétone) est de préférence supérieure à 280°C, et tout particulièrement supérieure à 300°C. La température de transition vitreuse du poly(aryléthercétone) est de préférence comprise entre 100 et 250°C, de préférence entre 120 et 200°C, et tout particulièrement entre 140 et 180°C.

De tels poly(aryléthercétones) sont disponibles dans le commerce, par exemple le PEKK sous le nom de Kepstan^{®} chez la société Arkema, et le PEEK sous le nom KetaSpire^{®} de chez la société Solvay, sous le nom de VestaKeep^{®} chez la société Evonik et PEEK Victrex^{®} chez la société Victrex.

Le mélange selon l'invention contient de préférence 50 à 98, de préférence 60 à 96, encore préféré 70 à 95% en poids de poly(aryléthercétone).

### Polysiloxane

Le mélange selon l'invention contient outre le poly(aryléthercétone) également un polysiloxane. De tels polysiloxanes peuvent être mono- ou di-substitués par des groupes alkyle en C₁ à C₁₂, de préférence en C₁ à C₆, et tout particulièrement en C₁ à C₄, et/ou des groupes phényle. De préférence, les groupes alkyle sont des groupes méthyle. Les groupes alkyle ou phényle du polysiloxane peuvent être substitués par un ou plusieurs groupes fonctionnels tels que époxy, alkoxy, notamment méthoxy, amine, cétone, thioéther, halogène, nitrile, nitro, sulfone, phosphoryle, imino ou thioester. Ces groupes fonctionnels peuvent également être situés en fin de chaîne du polysiloxane. De tels polysiloxanes fonctionnalisés peuvent être utilisés en vue de leur réaction pendant le mélange (siloxanes réactifs).

De préférence néanmoins, le polysiloxane ne comporte pas de groupes fonctionnels. Par ailleurs, les groupes alkyle ou phényle du polysiloxane peuvent être substitués par un ou plusieurs groupes carbocyclique, aryle, hétéroaryle, alkyle, alkényle, bicyclique ou tricylique.

De préférence, le polysiloxane présent dans le mélange est un poly(diméthylsiloxane) (PDMS).

De préférence, le polysiloxane présente un très haut poids moléculaire. Ainsi, le polysiloxane peut avantageusement avoir un poids moléculaire moyen en nombre allant de 100 000 à 1 000 000, et de préférence de 250 000 à 750 000.

Avantageusement, il peut s'agir d'un polysiloxane appartenant à la famille des pâtes de silicone. Ces silicones, vendus par exemple par la société Wacker, ont comme avantage de présenter une grande résistance thermique et aux produits chimiques, comme les poly(aryléthercétones).

Afin de bien se mélanger avec la matrice, le polysiloxane présente de préférence une viscosité inférieure de celle du poly(aryléthercétone). De préférence, la viscosité du polysiloxane est inférieure de moins de 30%, de préférence 20%, encore préféré 15% et tout particulièrement 10% de la viscosité du poly(aryléthercétone). Un polysiloxane présentant une viscosité, mesurée à 380°C et 1 Hz, supérieure à 50, avantageusement supérieure à 100 Pa·s, de préférence supérieure à 200 Pa·s et tout particulièrement supérieure à 300 Pa·s est particulièrement préféré.

Il est préféré que le polysiloxane soit inerte dans les conditions de préparation et d'utilisation du mélange de l'invention. Ainsi, il est avantageux que le polysiloxane résiste à la fabrication du mélange et donc à la température de fusion de la matrice en poly(aryléthercétone).

Un mélange comprenant 1 à 49, de préférence 2 à 40, encore préféré 2.5 à 25% en poids de polysiloxane est particulièrement préféré.

Afin de faciliter la manutention, le polysiloxane peut être combiné à un support solide tel qu'une silice, notamment de la silice pyrogénée. Le mélange se présente alors sous la forme de granulés ou de poudre. De telles formulations de polysiloxane comportent jusqu'à 55% en poids, de préférence jusqu'à 40 % en poids de support. Le support peut également être un autre type de charge ou encore une poudre polymère, pouvant être du même type que la matrice du mélange. Les indications de proportions en polysiloxane données dans la présente demande se réfèrent toujours à la teneur en polysiloxane, déduction faite du support.

De tels polysiloxanes sont disponibles dans le commerce. Ainsi, la société Wacker vend des polysiloxanes ultra haut poids moléculaire sous le nom de Genioplast^{®} GUM et ces mêmes polysiloxanes sur support de silice sous le nom de Génioplast^{®} PELLET S.

### Copolymère séquencé à blocs polysiloxane

Le mélange selon l'invention contient outre le poly(aryléthercétone) également un copolymère séquencé à blocs polysiloxane.

Les blocs polysiloxane peuvent être mono- ou di-substitués par des groupes alkyle C₁ à C₁₂, de préférence en C₁ à C₆, et tout particulièrement en C₁ à C₄ et/ou des groupes phényle. De préférence, les groupes alkyle sont des groupes méthyle. De préférence, les motifs polysiloxane présents dans le copolymère séquencé à blocs polysiloxane sont des motifs poly(diméthylsiloxane) (PDMS).

Les groupes alkyle ou phényle du bloc polysiloxane peuvent être substitués par un ou plusieurs groupes fonctionnels tels que époxy, alkoxy, notamment méthoxy, amine, cétone, thioéther, halogène, nitrile, nitro, sulfone, phosphoryle, imino ou thioester. Ces groupes fonctionnels peuvent également être situés en fin de chaîne du copolymère séquencé à blocs polysiloxane. De préférence néanmoins, le bloc polysiloxane ne comporte pas de groupes fonctionnels. Par ailleurs, les groupes alkyle ou phényle du bloc polysiloxane peuvent être substitués par un ou plusieurs groupes carbocyclique, aryle, hétéroaryle, alkyle, alkényle, bicyclique ou tricylique.

Le copolymère séquencé à blocs polysiloxane comporte par ailleurs des blocs de motifs différents des polysiloxanes. Il peut notamment s'agir de blocs polyéther-imide, poly(aryléthercétone), poly(aryléthersulfone), poly(sulfure de phénylène), poly(arylamideimide), poly(phénylène), poly(benzimidazole) et/ou polycarbonate. De préférence, le copolymère séquencé à blocs polysiloxane comporte en outre des blocs de poly(étherimide) ou de poly(arylcétonecétone).

Il est particulièrement préféré que le copolymère séquencé à blocs polysiloxane comporte des blocs du poly(aryléthercétone) composant la matrice du mélange selon l'invention.

Le copolymère séquencé à blocs polysiloxane comporte de préférence une teneur en siloxane de 10 à 70% en poids, avantageusement de 15 à 60% en poids, encore plus préférée 20 à 50% en poids par rapport au poids du copolymère. Contrairement aux compositions décrites dans le brevet US 8,013,251, l'utilisation d'un copolymère séquencé à blocs polysiloxane à teneur en siloxane élevée ne conduit pas à une délamination lors de l'extrusion et le moulage dans les mélanges selon l'invention. Le copolymère séquencé à blocs polysiloxane présente de préférence une viscosité, mesurée à 380°C et 1 Hz, supérieure à 100 Pa·s, de préférence supérieure à 200 Pa·s et tout particulièrement supérieure à 300 Pa·s. Selon un mode de réalisation, le copolymère séquencé à blocs polysiloxane présente une viscosité, mesurée à 380°C et 1 Hz, comprise entre 300 et 500 Pa·s. Selon un autre mode de réalisation, le copolymère séquencé à blocs polysiloxane présente une viscosité, mesurée à 380°C et 1 Hz, comprise entre 600 et 900 Pa·s.

Un mélange de polymère comprenant 1 à 49, de préférence 2 à 40, encore préféré 2.5 à 30% en poids de copolymère séquencé à blocs polysiloxane est particulièrement préféré.

De tels copolymères séquencés à blocs polysiloxanes sont disponibles dans le commerce. Ainsi, la société Sabic vend des copolymères à blocs PEI-PDMS sous le nom de Siltem^{®}. Par ailleurs, la société Idemitsu Kosan vend un copolymère polycarbonate-PDMS sous le nom de Tarflon^{®} Neo.

### Autres composantes

Le mélange selon l'invention peut comporter par ailleurs d'autres polymères, en plus faible quantité. Ainsi, la teneur en polymères additionnels, différents de ceux discutés plus haut, dans le mélange de l'invention est inférieure à 20% en poids, encore préféré inférieure à 15% en poids et tout particulièrement inférieure à 10% en poids. Parmi les polymères additionnels, on peut citer en particulier le polyétherimide.

Le mélange selon l'invention peut par ailleurs, comme discuté ci-dessus, comporter en outre des additifs habituels tels que des charges. Parmi les charges envisageables, on peut mentionner notamment la silice et l'alumine, les charges nucléantes telles que des charges minérales, notamment le talc, les charges carbonées, notamment les nanotubes de carbone, les fibres de carbone ou des oxydes métalliques, ou des charges renforçantes telles que les fibres de verre ou les fibres de carbone.

Par ailleurs, le mélange peut comporter éventuellement des quantités mineures d'additifs fonctionnels. On peut mentionner comme tels par exemples les agents antistatiques, les agents antioxydants, les stabilisants à l'état fondu, les agents conducteurs, les agents ignifugeants, les colorants ainsi que les agents réactifs tels que les carbonates alcalins.

Avantageusement, le mélange de polymères selon l'invention comprend 0 à 30, de préférence 1 à 20, encore préféré 2 à 10% en poids d'additifs. De préférence, le mélange ne comporte pas d'autres additifs que le support éventuel du polysiloxane. En particulier, il est préféré que le mélange selon l'invention ne comporte pas d'additifs conducteurs tels que par exemple le noir de carbone.

### Procédé de fabrication du mélange selon l'invention

Le mélange polymérique selon l'invention peut être obtenu par l'un quelconque des procédés connus dans l'état de la technique. Notamment, il peut être obtenu par mise en contact des composantes à une température supérieure à la température de fusion du poly(aryléthercétone). Après refroidissement, il peut ensuite être granulé, le cas échéant.

Un moyen aisé d'obtenir le mélange selon l'invention est d'introduire les composantes dans les proportions souhaitées dans un comalaxeur ou une extrudeuse, notamment une extrudeuse bi-vis, chauffés à une température excédant la température de fusion du poly(aryléthercétone). Selon le moyen de mélange choisi, on obtient le mélange selon l'invention sous forme de granulés.

Selon un mode de réalisation préféré, le mélange selon l'invention se présente sous l'aspect d'une composition hétérophasique. En effet, le plus souvent, le polysiloxane est peu ou pas soluble dans le poly(aryléthercétone). On observe alors en microscopie électronique une phase dispersée sous forme de nodules dans une phase continue. De préférence, les nodules ont un diamètre moyen inférieur à 20 µm, avantageusement inférieur à 10 µm et tout particulièrement inférieur à 5 µm.

De préférence, le poly(aryléthercétone) forme la phase continue (aussi appelée matrice) de la composition et le polysiloxane forme la phase dispersée. Le copolymère séquencé à blocs polysiloxane est de préférence essentiellement présent dans la phase dispersée.

### Utilisation des mélanges selon l'invention

Le mélange selon l'invention peut ensuite être utilisé pour la fabrication de pièces par l'un des procédés conventionnels de mise en forme.

Ainsi, le mélange selon l'invention peut être mis en forme par exemple par moulage, notamment par moulage par injection ou par moulage par compression, par extrusion, par extrusion calandrage, filage, rotomoulage, thermoformage, enduction, fabrication additive par fusion de filament (FFF), par extrusion de films ou de feuilles, par extrusion calandrage, extrusion de tubes ou tuyaux, extrusion gainage, filage, rotomoulage, thermoformage, enduction, fabrication additive par frittage laser, ou par revêtement à partir de poudre. Particulièrement intéressant est aussi l'utilisation du mélange selon l'invention pour la réalisation de composites.

Pour les trois derniers procédés de mise en forme, il est préféré de partir d'une poudre issue de la dite composition obtenue par les procédés de broyage standards. Particulièrement préférée est une poudre ayant un diamètre médian en volume (dv50) tel que mesuré selon la norme ISO 9276 - parties 1 à 6 de 10 à 400 µm. Dans la présente description, on utilise un granulomètre Malvern Mastersizer 2000 et la mesure est faite en voie liquide par diffraction laser sur la poudre.

Selon l'utilisation envisagée, il peut être avantageux d'ajouter à la poudre du mélange de l'invention une ou plusieurs charges telles que des fibres de carbone ou des fibres de verre et/ou d'autres additifs pulvérulents et/ou agents d'écoulement.

Les susdits procédés de transformation permettent l'obtention, à partir du mélange de polymère selon l'invention, de poudres, films ou feuilles, fibres, revêtements, pièces de dimensions et géométrie variées, et de pièces composites.

Le mélange selon l'invention est particulièrement intéressant pour la fabrication de pièces présentant une résistance au choc, un allongement à la rupture et une souplesse améliorés. Il en résulte la possibilité de fabriquer des pièces durables car présentant une plus faible propagation des fissures.

L'augmentation de la souplesse et de l'allongement à la rupture permettent des déformations plus élevées et en conséquence l'accès à de nouveaux designs, notamment pour le montage ou l'enroulage. Ainsi, le mélange selon l'invention est particulièrement intéressant pour la fabrication de pièces dans le domaine du pétrole, la câblerie, l'aéronautique, l'automobile, l'électronique, l'électrotechnique, les composites, la fabrication additive et des dispositifs médicaux.

Dans le domaine du pétrole, on peut mentionner notamment les conduites travaillant sur terre (« onshore » en anglais) ou en pleine mer (« offshore » en anglais), notamment les gaines ou tuyaux (« liner » en anglais) pour composites, les ombilicaux et les gaines de pression, les systèmes embarqués dans les puits (« downhole » en anglais) tels que les tiges de forage et les semi-produits (« stock shape » en anglais). Dans la câblerie, on peut citer en particulier les gaines de câbles pour l'isolation. Dans le domaine de l'aéronautique, on peut mentionner notamment les tuyaux, les pièces composites, les connecteurs et les supports. Dans le domaine automobile, on peut citer toutes les pièces d'environnement moteur ou transmission exposées à des températures élevées, comme par exemple les systèmes d'entrée et de sortie turbo ou les conduites véhiculant les liquides chauds ou agressifs (circuit d'huile, circuit de refroidissement, et circuit d'essence). Enfin, dans les dispositifs médicaux et d'analyse, on peut citer les flexibles résistants aux températures et pression élevées.

Par ailleurs, la souplesse améliorée du mélange permet d'envisager de nouvelles conceptions pour des pièces exposées à haute température et à haute résistance chimique.

L'invention sera expliquée plus en détail dans les exemples qui suivent.

### [Exemples]

### A. Préparation des mélanges de PEKK

Dans une extrudeuse bi-vis (Haake 2, diamètre : 16 mm, vitesse de vis : 340-360 rpm, débit : 3 kg/h), on a compoundé un poly(éthercétonecétone) (PEKK) (KEPSTAN^{®}, vendu par la société Arkema France) avec un copolymère poly(étherimide)-poly(diméthylsiloxane) (PEI-PDMS) (vendu par la société SABIC sous le nom de Siltem^{®} STM 1500 et Siltem^{®} STM 1700) et un polydiméthylsiloxane (PDMS) à poids moléculaire très élevé (Genioplast^{®} Gum, vendu par la société Wacker) ou un polydiméthylsiloxane (PDMS) à poids moléculaire très élevé sur support de silice (Génioplast^{®} PELLET S, vendu par la société Wacker, composition : 70% en poids de PDMS, 30% en poids de silice). A titre de comparaison, on a préparé des mélanges comportant outre le poly(éthercétonecétone) seulement le copolymère PEI-PDMS ou seulement le PDMS. La composition respective des mélanges est indiquée dans le tableau 1 ci-dessous.

Le profil de température dans l'extrudeuse est adaptée à la température de fusion du poly(éthercétonecétone) de type KEPSTAN^{®} 6000, présentant un ratio de motifs téréphtaliques à motifs isophtaliques de 60 : 40 et de type KEPSTAN^{®} 8000, présentant un ratio de motifs téréphtaliques à motifs isophtaliques de 80 : 20 comme suit :
poly(éthercétonecétone) de type KEPSTAN^{®} 6000 : 200 °C à l'entrée puis 330°C,
poly(éthercétonecétone) de type KEPSTAN^{®} 8000 : 220 °C à l'entrée puis 380°C,
Le compound obtenu est granulé puis séché à 120°C sous vide pendant 24 h.

**Tableau 1 : Compositions des mélanges de polymères préparés**

| Example | PEKK (Kepstan^{®} 6001) | | PEKK (Kepstan^{®} 8001) | | copolymère PEI-PDMS [% en poids] | PDMS en poids] | PDMS sur support silice [% en poids] |
|---|---|---|---|---|---|---|---|
| | viscosité 800 Pa·s* [% en poids] | viscosité 1080 Pa·s* [% en poids] | viscosité 800 Pa·s* [% en poids] | viscosité 1650 Pa·s* [% en poids] | | | |
| 1 | 85,5 | - | - | - | 7,5⁺ | 7 | - |
| 2 | - | 85,5 | - | - | 7,5⁺ | 7 | - |
| 3 | - | - | 85,5 | - | 7,5⁺ | 7 | - |
| 4 | - | - | - | 85,5 | 7,5⁺ | 7 | - |
| 5 | - | - | 92.75 | - | 3,75⁺ | 3,5 | - |
| 6 | - | - | 82,5 | - | 7,5⁺ | - | 10 |
| 7 | - | - | 85,5 | - | 7,5° | 7 | - |
| 8 | - | - | 82,5 | - | 7,5° | - | 10 |
| REF1 | 100 | - | - | - | - | - | - |
| REF2 | - | - | 100 | - | - | - | - |
| Comp 1 | 90 | - | - | - | - | 10 | - |
| Comp 2 | - | - | 90 | - | - | 10 | - |
| Comp 3 | - | - | 90 | - | 10⁺ | - | - |
| Comp 4 | - | - | 80 | - | 20⁺ | - | - |

| | | | | | | | |
|---|---|---|---|---|---|---|---|
| * à 380°C et à 1 Hz ⁺ Siltem^{®} STM 1500 ° Siltem^{®} STM 1700 | | | | | | | |

### B. Evaluation de la résistance au choc et à la traction

Les propriétés mécaniques et la résistance au choc des mélanges selon l'invention ont été évaluées au moyen d'haltères de traction 1A selon la norme ISO 527-2 et de barreaux choc 80*10*4 mm³ selon la norme Choc Charpy ISO 179. Les éprouvettes ont été préparées par injection sur une presse Battenfeld en utilisant les paramètres suivants, selon le type de PEKK utilisé :
poly(éthercétonecétone) de type KEPSTAN^{®} 6000 : alimentation 330°C; Buse : 345°C ; Moule 80°C
poly(éthercétonecétone) de type KEPSTAN^{®} 8000 : alimentation 355°C;Buse :380°C ;Moule 230°C

La résistance au choc entaillé type A a été évaluée sur une machine d'essai de choc (Zwick 5102) selon la norme ISO 179. Les éprouvettes ont d'abord été entaillées (en V avec un rayon de fond d'entaille de 0,25 +/- 0,5 mm) sur un dispositif spécialement prévu à cet effet (Automatic Notchvis Plus, commercialisé par la société Ceast) puis laissées au repos pendant 24h (à 23°C et 50% d'humidité relative) afin de relaxer les contraintes. Chaque essai a été réalisé sur au moins trois éprouvettes. On évalue le type de rupture de l'éprouvette selon la définition suivante :
C : Rupture complète. L'éprouvette se sépare en deux ou plusieurs pièces.

H : Rupture charnière. L'éprouvette rompt de manière incomplète, les deux parties de l'éprouvette étant solidarisés seulement par une couche mince périphérique formant une charnière sans rigidité résiduelle.

P : Rupture partielle. L'éprouvette rompt de manière partielle sans répondre à la définition de la rupture charnière ci-dessus.

La résistance à la traction des éprouvettes a été mesurée sur une machine d'essai de traction (Zwick 1445) dans les conditions suivantes : température 23°C, 50% d'humidité relative. Le module d'Young a été calculé avec un extensomètre mécanique entre 0,05 et 0,25% de déformation à 1 mm/min, le reste de l'essai de traction, jusqu'à la rupture, a été réalisé à 50 mm/min. On note le nombre d'éprouvettes ayant rompu avant ou après la déformation au seuil de plasticité. Une éprouvette ayant rompu avant ce seuil est classée comme fragile et une éprouvette ayant rompu après ce seuil est classée comme ductile. Par exemple, la mention de « 1D/2F » correspond à une éprouvette ayant rompu après le seuil, et donc classée comme ductile, et deux éprouvettes ayant rompu avant le seuil, et donc classées comme fragiles.

Les résultats des évaluations sont rassemblés dans le tableau 2 ci-dessous.

**Tableau 2 : Résistance à la traction et au choc des mélanges**

| Example | Résistance au choc (entaillé type A) | | Résistance à la traction (1A) | | |
|---|---|---|---|---|---|
| | Résilience [kJ/m²] | Type de rupture* | Déformation en traction ε_{T} [%] | Module d'Young E (MPa) | Type de rupture** |
| 1 | 27,4 | P | 10,8 | ND | 3D |
| 2 | 34,0 | P | 11,4 | ND | 3D |
| 3 | 20,2 | C | 14,1 | 2954 | 3D |
| 4 | 17,8 | C | 6,0 | ND | 1F/2D |
| 5 | 13.5 | C | 16,4 | 3523 | 3D |
| 6 | 13.4 | C | 9.6 | 3121 | 3D |
| 7 | 11.0 | C | ND | ND | ND |
| 8 | 13.2 | C | ND | ND | ND |
| REF1 | 5,1 | C | 19,0 | ND | 4D |
| REF2 | 5,2 | C | 4,7 | 4045 | 3F |
| Comp 1 | 21,6 | H | 4,6 | ND | 2F/2D |
| Comp 2 | 7,8 | C | 4,6 | ND | 2F/1D |
| Comp 3 | 9,1 | C | ND | ND | ND |
| Comp 4 | 6,4 | C | ND | ND | ND |

| | | | | | |
|---|---|---|---|---|---|
| * C = complète ; H=charnière ; P=partielle ** D=ductile ; F=fragile (avant la déformation au seuil de traction) | | | | | |

On constate que la résistance au choc des mélanges selon l'invention est nettement plus élevée que celles des résines de référence. En outre, on note que pour un PEKK donné, la résistance au choc des mélanges selon l'invention est supérieure à celle des mélanges de comparaison dépourvu de copolymère séquencé à bloc polysiloxane (Comp 1 et 2) ou de polysiloxane (Comp 3 et 4), même lorsque la teneur en modifiants est inférieure. On remarque que les mélanges selon l'exemple 1 et 3 contiennent 10% en masse de PDMS (somme des taux massiques de PDMS et de motifs PDMS du copolymère PEI-PDMS), soit la même quantité de PDMS globale que les exemples Comp 1 et Comp 2.

On observe notamment pour les exemples 1 et 2 (comprenant un PEKK amorphe) un changement de mode de rupture. En outre, on note que pour un PEKK donné, la résistance au choc des mélanges selon l'invention est supérieure à celle des mélanges de comparaison dépourvu de copolymère séquencé à bloc polysiloxane (Comp 1 et 2) ou de polysiloxane (Comp 3 et 4), même quand la teneur en modifiants est inférieure. Ces essais démontrent donc que la résilience des mélanges ternaires selon l'invention et supérieure à celle des mélanges binaires.

Concernant la résistance à la traction, on observe que seul le mélange selon l'invention à base de PEKK amorphe (exemple 1) présente une déformation plus faible que la résine de référence (REF1), bien que néanmoins meilleure que le mélange binaire (Comp 1). Les mélanges selon l'invention à base de PEKK semi-cristallin (exemples 3, 5 et 6) présentent des valeurs nettement supérieures à celle de la résine de référence (REF 2) et du mélange binaire (Comp 2). Ces essais mettent donc en évidence que la résistance à la traction des mélanges ternaires selon l'invention est supérieure à celle des mélanges binaires étudiés.

Nous avons également évalué un mélange avec un polysiloxane combiné à de la silice pyrogénée (exemple 6), plus facile à mettre en œuvre car sous forme de granulés. Ce mélange présente une résistance au choc et un allongement à la rupture supérieurs à la matrice seule ou au mélange binaire. Néanmoins, il n'atteint pas le niveau du mélange équivalent sans silice (exemple 3). Les résultats des essais permettent de conclure que la déformation à la traction des mélanges selon l'invention est supérieure à celle des mélanges binaires étudiés.

Nous avons également évalué un mélange avec un copolymère séquencé à blocs polysiloxane à plus faible teneur en polysiloxane (Syltem^{®} STM 1700). Ce copolymère apporte également un gain en termes de résistance au choc, par rapport à la matrice pure (REF 2) comme par rapport au mélange binaire (Comp 2, 3 et 4).

La comparaison des propriétés des mélanges se différenciant que par la viscosité de la matrice PEKK (exemples 1/2 et 3/4) fait par ailleurs apparaître un impact substantiel de la viscosité de la matrice.

### C. Etude de la morphologie des mélanges

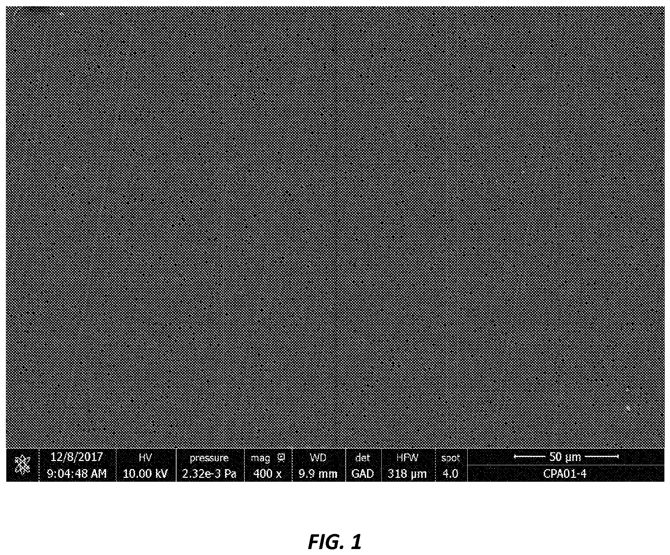

Afin d'étudier la morphologie des mélanges préparés, on les a observés par microscopie électronique à balayage (MEB ; modèle QUANTA FEG250 de chez FEl) en mode BSE, sur faciès surfacés par microtomie (couteau diamant/température ambiante), avec un grossissement X400. Les résultats sont illustrés aux Fig. 1 à 3.

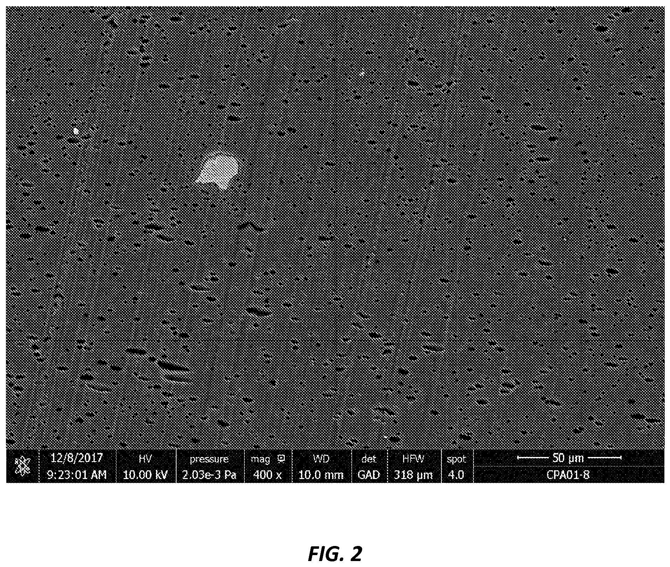

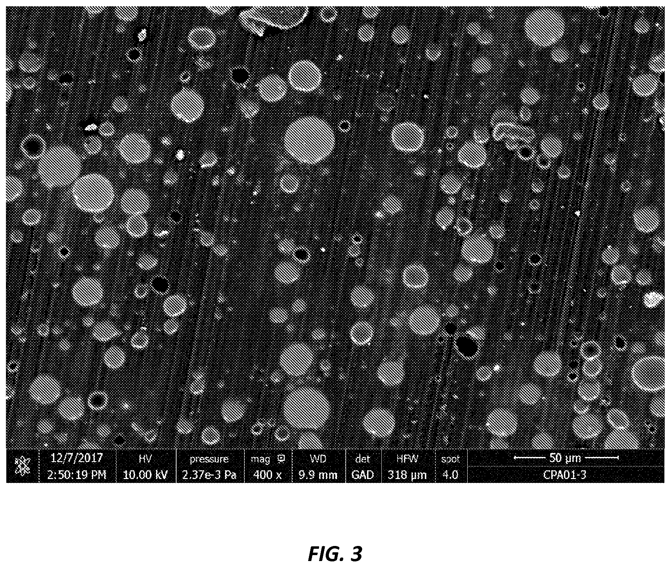

On constate que tous les mélanges évalués sont hétérophasiques. Pour le mélange de l'exemple 3 (voir Fig.1), la dispersion est très fine, avec une dimension de la phase dispersée de l'ordre de 0,1 à 1,2 µm. Pour le mélange de l'exemple 4 (voir Fig. 2), qui se distingue de l'exemple 3 seulement par un poly(éthercétonecétone) de viscosité plus élevée, on constate que la phase dispersée est de taille supérieure. Le mélange binaire selon l'exemple comparatif 2 (voir Fig. 3), dépourvu de copolymère séquencé à blocs polysiloxane, présente une phase dispersée avec une dimension de la phase dispersée nettement plus importante, de l'ordre de 1 à 40 µm.

On constate donc que la présence du copolymère séquencé à blocs polysiloxane affecte favorablement la microstructure du mélange. Il est supposé que ce résultat est lié notamment à une meilleure dispersion du polysiloxane. Sans vouloir être lié par cette hypothèse, il est supposé que le copolymère séquencé à blocs polysiloxane permet la formation de nodules de taille inférieure en agissant comme un agent tensioactif.

### D. Evaluation de la tenue au feu

Afin de vérifier si les mélanges conservent les propriétés intéressantes de la matrice poly(aryléthercétone), des essais de tenue au feu ont été réalisés comme suit.

Les sections utiles (4 * 10 mm²) d'éprouvettes de traction ISO 527 1A préparées comme indiqué ci-dessus ont été soumis à des essais de type Indice d'oxygène limité (LOI, « limited Oxygen Index ») sur éprouvette de type I conformément à ISO 4589 dans les conditions ci-après. Les éprouvettes ont été mis en atmosphère composée d'un mélange d'oxygène et d'azote, la concentration en oxygène de ce mélange étant augmentée par palier de 1% jusqu'à ce qu'au moins une des deux conditions ci-après soit remplie :
- le temps de combustion Tc excède 3 minutes,
- la combustion procède jusqu'à 50 mm en-dessous du sommet de l'éprouvette.

Les essais ont été réalisés sur deux éprouvettes, respectivement. Les résultats sont rassemblés dans le tableau 3 ci-dessous.

**Tableau 3 : Résultats des essais de tenue au feu**

| Exemple | Tc à 39% O₂ [s] | Tc à 40% O₂ [s] | | Tc à 41% O₂ [s] | |
|---|---|---|---|---|---|
| REF 2 | 64 | 77 | > 3 min | ND | ND |
| 3 | ND | 18 | 33 | 27 | > 3 min |

On observe que les propriétés de tenue au feu de la matrice poly(aryléthercétone) sont conservées dans le mélange selon l'invention, et même légèrement améliorées.

L'ensemble des résultats met en évidence que les mélanges de poly(aryléthercétone) selon l'invention permettent d'améliorer la résilience et la déformation en traction comparé au poly(aryléthercétone) seul et aux mélanges binaires, comprenant soit le copolymère séquencé à blocs polysiloxane, soit un polysiloxane. L'étude de la morphologie de ces mélanges révèle un effet favorable du copolymère séquencé à blocs polysiloxane sur la dispersion du polysiloxane dans le poly(aryléthercétone). Enfin, il a été vérifié que les propriétés de tenue au feu du poly(aryléthercétone) sont conservées dans les mélanges selon l'invention.

### [Liste des documents cités]

US 2009/0292073 A1
US 2005/0004326 A1
US 8,013,251 B2
US 2017/0242372 A1

## Revendications

1. Mélange de polymères, comprenant :
(i) un poly(aryléthercétone) ;
(ii) un polysiloxane ; et
(iii) un copolymère séquencé à blocs polysiloxane, et
optionnellement des polymères additionnels, différents desdits poly(aryléthercétone), polysiloxane, et copolymère séquencé à blocs polysiloxane, la teneur en polymères additionnels étant inférieure à 20% en poids.

2. Mélange de polymères selon la revendication 1, dans lequel le poly(aryléthercétone) présente une viscosité, telle que mesurée à 380°C et 1 Hz par la méthode indiquée dans la description, supérieure à 100 Pa·s, de préférence supérieure à 200 Pa·s et tout particulièrement supérieure à 300 Pa·s.

3. Mélange de polymères selon l'une des revendications 1 à 2, dans lequel le poly(aryléthercétone) est choisi parmi le groupe constitué de poly-éther-cétone (PEK), polyéther-éther-cétone (PEEK), poly-éther-éther-cétone-cétone (PEEKK), poly-éther-éther-cétone-cétone (PEKK), poly-éther-cétone-éther-cétone-cétone (PEKEKK), poly-éther-éther-cétone-éther-cétone (PEEKEK), poly-éther-éther-éther-cétone (PEEEK), et poly-éther-diphényle-éther-cétone (PEDEK), leurs mélanges et leurs copolymères entre eux ou avec d'autres membres de la famille des poly(aryléthercétone).

4. Mélange de polymères selon l'une des revendications 1 à 3, comprenant 50 à 98, de préférence 60 à 96, encore préféré 70 à 95% en poids de poly(aryléthercétone).

5. Mélange de polymères selon l'une des revendications 1 à 4, dans lequel le poly(aryléthercétone) est un poly(éthercétonecétone) (PEKK), un poly(étheréthercétone) (PEEK) ou un de ses mélanges.

6. Mélange de polymères selon l'une des revendications 1 à 5, dans lequel le PEKK présente un pourcentage massique en motifs téréphtaliques par rapport à la somme des motifs téréphtaliques et isophtaliques compris entre 50 et 90%.

7. Mélange de polymères selon l'une des revendications 1 à 6, dans lequel le polysiloxane présente une viscosité, telle que mesurée à 380°C et 1 Hz par la méthode indiquée dans la description, supérieure à 100 Pa·s, de préférence supérieure à 200 Pa·s et tout particulièrement supérieure à 300 Pa·s.

8. Mélange de polymères selon l'une des revendications 1 à 7, comprenant 1 à 49, de préférence 2 à 40, encore préféré 2.5 à 25 % en poids de polysiloxane.

9. Mélange de polymères selon l'une des revendications 1 à 8, dans lequel le copolymère séquencé à blocs polysiloxane présente une viscosité, telle que mesurée à 380°C et 1 Hz par la méthode indiquée dans la description, supérieure à 100 Pa·s, de préférence supérieure à 200 Pa·s et tout particulièrement supérieure à 300 Pa·s.

10. Mélange de polymères selon l'une des revendications 1 à 9, comprenant 1 à 49, de préférence 2 à 40, encore préféré 2,5 à 30% en poids de copolymère séquencé à blocs polysiloxane.

11. Mélange de polymères, selon l'une des revendications 1 à 10, dans lequel le copolymère séquencé à blocs polysiloxane comporte en outre des blocs choisis parmi les poly(étherimide), les poly(aryléthercétone), les poly(aryléthersulfone), les poly(sulfure de phénylène), les poly(arylamideimide), les poly(phénylène), les poly(benzimidazole), ou polycarbonate.

12. Procédé de préparation d'un mélange de polymères selon la revendication 1 à 11, comprenant les étapes de :
a. mettre en contact un poly(aryléthercétone), un polysiloxane et un copolymère séquencé à blocs polysiloxane dans des conditions où le poly(aryléthercétone) entre en fusion ; et
b. laisser le dit mélange refroidir pour obtenir le mélange.

13. Procédé selon la revendication 12, dans lequel l'étape (a) est réalisée dans une extrudeuse bi-vis ou un comalaxeur.

14. Utilisation d'un mélange de polymères selon l'une des revendications 1 ou 11 pour la fabrication de pièces, notamment par moulage, notamment par moulage par injection ou par moulage par compression, par fabrication additive par fusion de filament (FFF), extrusion de films ou de feuilles, extrusion calandrage, extrusion de tubes ou tuyaux, extrusion gainage, filage, rotomoulage, thermoformage, enduction, fabrication additive par frittage laser, revêtement à partir de poudre ou pour la réalisation de composites.

15. Pièce, fabriquée au moins partiellement à partir du mélange de polymères selon l'une des revendications 1 à 11.

## Patentansprüche

1. Polymermischung, umfassend:
(i) ein Poly(aryletherketon);
(ii) ein Polysiloxan; und
(iii) ein Polysiloxanblockcopolymer, und
gegebenenfalls zusätzliche Polymere, die sich von dem Poly(aryletherketon), Polysiloxan und Polysiloxanblockcopolymer unterscheiden, wobei der Gehalt an zusätzlichen Polymeren weniger als 20 Gew.-% beträgt.

2. Polymermischung nach Anspruch 1, wobei das Poly(aryletherketon) eine Viskosität, gemessen bei 380 °C und 1 Hz nach dem in der Beschreibung angegebenen Verfahren, von mehr als 100 Pa·s, bevorzugt mehr als 200 Pa·s und am meisten bevorzugt mehr als 300 Pa·s aufweist

3. Polymermischung nach einem der Ansprüche 1 bis 2, wobei das Poly(aryletherketon) ausgewählt ist aus der Gruppe bestehend aus Polyetherketon (PEK), Polyetheretherketon (PEEK), Polyetheretherketonketon (PEEKK), Polyetheretherketonketon (PEKK), Polyetherketonetherketonketon (PEKEKK), Polyetheretherketonetherketon (PEEKEK), Polyetheretheretherketon (PEEEK) und Polyetherdiphenyletherketon (PEDEK), ihren Mischungen und ihren Copolymeren miteinander oder mit weiteren Elementen der Familie der Poly(aryletherketone).

4. Polymermischung nach einem der Ansprüche 1 bis 3, umfassend 50 bis 98, bevorzugt 60 bis 96, besonders bevorzugt 70 bis 95 Gew.-% Poly(aryletherketon).

5. Polymermischung nach einem der Ansprüche 1 bis 4, wobei das Poly(aryletherketon) ein Poly(etherketonketon) (PEKK), ein Poly(etheretherketon) (PEEK) oder eine Mischung davon ist.

6. Polymermischung nach einem der Ansprüche 1 bis 5, wobei das PEKK einen Massenanteil an Terephthaleinheiten, bezogen auf die Summe der Terephthal- und Isophthaleinheiten, zwischen 50 und 90% aufweist.

7. Polymermischung nach einem der Ansprüche 1 bis 6, wobei das Polysiloxan eine Viskosität, gemessen bei 380 °C und 1 Hz nach dem in der Beschreibung angegebenen Verfahren, von mehr als 100 Pa·s, vorzugsweise mehr als 200 Pa·s und am meisten bevorzugt mehr als 300 Pa·s aufweist.

8. Polymermischung nach einem der Ansprüche 1 bis 7, umfassend 1 bis 49, bevorzugt 2 bis 40, besonders bevorzugt 2,5 bis 25 Gew.-% Polysiloxan.

9. Polymermischung nach einem der Ansprüche 1 bis 8, wobei das Polysiloxanblockcopolymer eine Viskosität, gemessen bei 380 °C und 1 Hz nach dem in der Beschreibung angegebenen Verfahren, von mehr als 100 Pa·s, vorzugsweise mehr als 200 Pa·s und am meisten bevorzugt mehr als 300 Pa·s aufweist.

10. Polymermischung nach einem der Ansprüche 1 bis 9, umfassend 1 bis 49, bevorzugt 2 bis 40, besonders bevorzugt 2,5 bis 30 Gew.-% Polysiloxanblockcopolymer.

11. Polymermischung nach einem der Ansprüche 1 bis 10, wobei das Polysiloxanblockcopolymer ferner Blöcke ausgewählt aus Poly(etherimid), Poly(aryletherketon), Poly(arylethersulfon), Poly(phenylensulfid), Poly(arylamidimid), Poly(phenylen), Poly(benzimidazol) oder Polycarbonat aufweist.

12. Verfahren zur Herstellung einer Polymermischung nach den Ansprüchen 1 bis 11, umfassend die Schritte:
a. in-Kontakt-bringen eines Poly(aryletherketons), eines Polysiloxans und eines Polysiloxanblockcopolymers unter Bedingungen, unter denen das Poly(aryletherketon) schmilzt; und
b. Abkühlen lassen der Mischung, um die Mischung zu erhalten.

13. Verfahren nach Anspruch 12, wobei Schritt (a) in einem Doppelschneckenextruder oder Kokneter durchgeführt wird.

14. Verwendung einer Polymermischung nach einem der Ansprüche 1 oder 11 zur Fertigung von Teilen, insbesondere durch Formen, insbesondere durch Spritzgießen oder Formpressen, durch additive Fertigung durch Schmelzen von Filamenten (FFF), Film- oder Folienextrusion, Kalandrierextrusion, Extrusion von Rohren oder Schläuchen, Extrusionsummantelung, Spinnen, Rotationsformen, Thermoformen, Beschichtung, additive Fertigung durch Lasersintern, Pulverbeschichtung oder zur Herstellung von Verbundwerkstoffen.

15. Teil, gefertigt zumindest teilweise aus der Polymermischung nach einem der Ansprüche 1 bis 11.

## Claims

1. Polymer blend comprising:
(i) a poly(aryl ether ketone);
(ii) a polysiloxane; and
(iii) a block copolymer containing polysiloxane blocks, and
optionally additional polymers, different from said poly(aryl ether ketone), polysiloxane, and block copolymer containing polysiloxane blocks, the content of additional polymers being less than 20% by weight.

2. Polymer blend according to Claim 1, wherein the poly(aryl ether ketone) has a viscosity, as measured at 380°C and 1 Hz by the method indicated in the description, of greater than 100 Pa·s, preferably greater than 200 Pa·s and most particularly greater than 300 Pa·s.

3. Polymer blend according to either of Claims 1 and 2, wherein the poly(aryl ether ketone) is chosen from the group consisting of poly(ether ketone) (PEK), poly(ether ether ketone) (PEEK), poly(ether ether ketone ketone) (PEEKK), poly(ether ether ketone ketone) (PEKK), poly(ether ketone ether ketone ketone) (PEKEKK), poly(ether ether ketone ether ketone) (PEEKEK), poly(ether ether ether ketone) (PEEEK) and poly(ether diphenyl ether ketone) (PEDEK), blends thereof and copolymers thereof with each other or with other members of the poly(aryl ether ketone) family.

4. Polymer blend according to one of Claims 1 to 3, comprising 50% to 98%, preferably 60% to 96% and more preferably 70% to 95% by weight of poly(aryl ether ketone).

5. Polymer blend according to one of Claims 1 to 4, wherein the poly(aryl ether ketone) is a poly(ether ketone ketone) (PEKK), a poly(ether ether ketone) (PEEK), or a blend thereof.

6. Polymer blend according to one of Claims 1 to 5, wherein the PEKK has a mass percentage of terephthalic units relative to the sum of the terephthalic and isophthalic units of between 50% and 90%.

7. Polymer blend according to one of Claims 1 to 6, wherein the polysiloxane has a viscosity, as measured at 380°C and 1 Hz by the method indicated in the description, of greater than 100 Pa·s, preferably greater than 200 Pa·s and most particularly greater than 300 Pa·s.

8. Polymer blend according to one of Claims 1 to 7, comprising 1% to 49%, preferably 2% to 40% and more preferably 2.5% to 25% by weight of polysiloxane.

9. Polymer blend according to one of Claims 1 to 8, wherein the block copolymer containing polysiloxane blocks has a viscosity, as measured at 380°C and 1 Hz by the method indicated in the description, of greater than 100 Pa·s, preferably greater than 200 Pa·s and most particularly greater than 300 Pa·s.

10. Polymer blend according to one of Claims 1 to 9, comprising 1% to 49%, preferably 2% to 40% and more preferably 2.5% to 30% by weight of block copolymer containing polysiloxane blocks.

11. Polymer blend according to one of Claims 1 to 10, wherein the block copolymer containing polysiloxane blocks also comprises blocks chosen from poly(etherimides), poly(aryl ether ketones), poly(aryl ether sulfones), poly(phenylene sulfides), poly(arylamideimides), poly(phenylenes), poly(benzimidazoles) or polycarbonates.

12. Process for preparing a polymer blend according to Claims 1 to 11, comprising the steps of:
a. bringing a poly(aryl ether ketone), a polysiloxane and a block copolymer containing polysiloxane blocks into contact under conditions in which the poly(aryl ether ketone) melts; and
b. allowing said blend to cool to obtain the blend.

13. Process according to Claim 12, wherein step (a) is performed in a twin-screw extruder or a co-kneader.

14. Use of a polymer blend according to one of Claims 1 and 11, for the manufacture of parts, in particular by moulding, in particular by injection moulding or by compression moulding, by fused filament fabrication (FFF) additive manufacturing, extrusion of films or sheets, calendering extrusion, extrusion of tubes or pipes, sheathing extrusion, spinning, rotational moulding, thermoforming, coating, laser-sintering additive manufacturing, powder coating, or for the production of composites.

15. Part manufactured at least partially from the polymer blend according to one of Claims 1 to 11.
